(19) Europäisches Patentamt
European Patent Office
Office européen des brevets

(11) **EP 3 474 686 B1**

(12) **EUROPEAN PATENT SPECIFICATION**

(45) Date of publication and mention
of the grant of the patent:
**10.01.2024 Bulletin 2024/02**

(51) International Patent Classification (IPC):
**A23L 33/115** (2016.01)    **A23L 23/10** (2016.01)
**A23P 10/25** (2016.01)    **A23P 10/28** (2016.01)

(21) Application number: **17734684.8**

(52) Cooperative Patent Classification (CPC):
**A23P 10/28; A23L 23/10; A23P 10/25**

(22) Date of filing: **23.06.2017**

(86) International application number:
**PCT/EP2017/065482**

(87) International publication number:
**WO 2018/001876 (04.01.2018 Gazette 2018/01)**

(54) **HARD BOUILLON TABLET**

HARTE BOUILLONTABLETTE

CUBE DE BOUILLON DUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.06.2016 EP 16176696**

(43) Date of publication of application:
**01.05.2019 Bulletin 2019/18**

(73) Proprietor: **Société des Produits Nestlé S.A.
1800 Vevey (CH)**

(72) Inventors:
• **BULLING, Katharina**
70176 Stuttgart (DE)
• **PERDANA, Jimmy**
78224 Singen (DE)
• **SAGALOWICZ, Laurent**
1807 Blonay (CH)
• **KJOLBY, Christian**
1053 Bretigny-sur-Morrens (CH)
• **MARAZZATO, Michele**
3672 Oberdiessbach (CH)
• **LOPEZ, Alejandro**
60326 Frankfurt/Main (DE)
• **SCHMITT, Bertrand**
1012 Lausanne (CH)

(74) Representative: **Dinger, Hansjörg
Société des Produits Nestlé S.A.
Avenue Nestlé 55
1800 Vevey (CH)**

(56) References cited:
**EP-A1- 0 823 473      EP-A1- 2 842 434
WO-A1-2004/049831      WO-A1-2009/074442
WO-A1-2012/080063      WO-A1-2013/064449**

• **STEPHEN B. SMITH ET AL: "Regulation of Fat and Fatty Acid Composition in Beef Cattle", ASIAN-AUSTRALASIAN JOURNAL OF ANIMAL SCIENCES., vol. 22, no. 9, 26 August 2009 (2009-08-26), pages 1225-1233, XP055328810, KR ISSN: 1011-2367, DOI: https://doi.org/10.5713/ajas.2009.r.10**
• **S. Souci, W. Fachmann, H. Kraut: ""Beef-suet tallow" in: Souci-Fachmann- Kraut : Food Composition and Nutrition Tables, 7th revised and completed edition", 21 May 2008 (2008-05-21), CRC P. Inc; Medpharm Scientific Publishers, Stuttgart, Germany, XP002765242, ISBN: 9780849341410 page 192, line 25 - line 45**
• **HAROLD H. TAYLOR, F. E. LUDDY, J. W. HAMPSON, H. L. ROTHBART: "Substitutability of fractionated beef tallow for other fats and oilsin the food and confectionery industries: An economic evaluation", JOURNAL OF THE AMERICAN OIL CHEMISTS SOCIETY, vol. 53, no. 7, 1 July 1976 (1976-07-01), pages 491-495, XP008182639, DOI: 10.1007/BF02636821**

EP 3 474 686 B1

**Description**

**TECHNICAL FIELD**

The invention relates to a hard bouillon tablet and the manufacturing process for the production of a hard bouillon tablet. In particularly the invention relates to a hard bouillon tablet and to a process for the production of a hard bouillon tablet wherein a beef fat having a total saturated fat content of 54 to 72 wt% (based on weight of total fat) comprising 26.5-31 wt% (based on weight of total fat) of $C18:0$ and 25.5 to 33 wt% (based on weight of total fat) of $C16:0$ is used.

**BACKGROUND**

A hard bouillon tablet is an agglomerate of different food ingredients that are initially in a solid physical state at room temperature in a free flowing powder form bound together after pressing in a regular geometrical form being the most common a cubical or rectangular prisma also known as bouillon tablet or bouillon cubes. A hard bouillon tablet is widely used as a concentrate to prepare a bouillon, a broth or a soup. The hard bouillon tablet is normally added to a hot aqueous solution, allowing it to dissolve. In addition, a hard bouillon tablet may be used when preparing other dishes, as a seasoning product. The dissolution time of hard bouillon tablets highly depends on it's degree of compaction which can be measured / expressed by the hardness of such a product. The reason to compact powders in a regular form presents several advantages for the commercialisation (e.g. reduction of volume, optimisation of packaging material usage, shelf life and convenience). A habit developed by users of hard bouillon is the crumbing of the tablet into the dish during preparation process either to ensure good distribution and or to accelerate its dissolution time in the cooking water. This crumbliness it's one of the attributes that needs to be ensured during shelf life and therefore a post-hardening of the tablet or cube has to be avoided. A minimum hardness is necessary to allow a wrapping of the tablet. A maximum hardness ensures that a normal user can break the tablet with its fingers without the use of additional tools or appliances. A direct relationship between the free flowing powders that have no binding properties and the ones having binding properties is established and the overall texture defined by the degree of this interacitons and the environmental conditions that find place during process, storage, distribution and usage. When the used fat has less cohesion properties the final product might result in a breakable tablet not suitable for a wrapping/packaging process. A binding system needs therefore to be designed in function of the final hardness the producer wants to achieve to ensure consumer habits as crumbliness and to ensure a minimum mechanical stress resistance through the wrapping / packaging process. It needs to be stable along shelf life to avoid physical changes during shelf life, e.g. post hardening, either induced by the temperature and/or relative humidity conditions or even by the handling of the product.
A typical hard bouillon tablet comprises salts, taste enhancing compounds like monosodium glutamate (MSG), sugars, starch or flour, fat, flavouring components, vegetables, meat extracts, spices, colorants etc. The amounts of the respective compounds may vary depending on the specific purpose of the product, the market or taste of the consumer that is aimed at.

A conventional way of manufacturing hard bouillon tablets comprises mixing powdered bouillon components with fat and controlled amounts of oil, and pressing the mix into tablet form.

As the fat used in a hard bouillon tablet should not stain the packaging and/or melt upon storage, hydrogenated vegetable oils/fats are used optionally together with liquid oil.

The most common used fat is palm fat as it provides good technical properties for processing a hard bouillon tablet due to the good flow-ability of the bouillon mass before pressing. In addition palm fat delivers good binding properties to the hard bouillon itself resulting in a good hardness of the tablet but still easy to crumble.

Consumers are increasingly becoming sensitive to palm fat concerns. Many of them perceive palm fat as not healthy and many others perceive it as not environmentally sustainable as a lot of news mention that the rain forest is destroyed to grow palm trees.

EP1401295 describes a hard bouillon tablet which only or mainly contains liquid oil, especially a healthy oil rich in monounsaturated fatty acids and/or polyunsaturated fatty acids, and no or only little amounts of fat. The drawback of using liquid oil instead of fat is that maltodextrin is needed which also is negatively perceived by the consumers. EP2842434 A1 discloses an iron fortified bouillon tablet comprising 10% of beef fat, sodium chloride, monosodium glutamate, ferric pyrophosphate, and a citrate puffer, wherein the beef fat is used in combination with plant fat.

Hence there is an existing need in the art and food industry to provide a better solution for a hard bouillon tablet using no palm fat or at least provides an alternative solution.

**SUMMARY OF THE INVENTION**

The object of the present invention is to improve the state of the art or at least provide an alternative for a hard bouillon tablet:

i) avoid using palm fat;
ii) the hard bouillon tablet has a good crumbliness;
iii) avoid the usage of hydrogenated oils and fats;
iv) reach a shelf life over 12 month with the same sensory properties and avoid post-hardening of the tablet.
v) provide a binder which also add taste to the product;
vi) no migration of liquid ingredients out of the hard bouillon tablet;
vii) to use a fat which is stable against rancidity;
viii) enables the user to break the tablet in crumbles to accelerate dissolution

The object of the present invention is achieved by the subject matter of the independent claims. The dependent claims further develop the idea of the present invention.

Accordingly, the present invention provides in a first aspect a hard bouillon tablet comprising

i) 40 to 80% crystalline ingredients (by weight of the composition);
ii) 0.5 to 20% flavourings (by weight of the composition);
iii) 0.5 to 35% amorphous ingredients (by weight of the composition);
iv) 5 to 20% beef fat (by weight of the composition);

wherein the beef fat has a total saturated fat content of 54 to 72 wt% (based on weight of total fat); and
wherein the beef fat comprises 26.5-31 wt% (based on weight of total fat) of C18:0 and 25.5 to 33 wt% (based on weight of total fat) of C16:0.

In a second aspect of the invention, there is provided a process for the preparation of a hard bouillon tablet comprising

a) Mixing 40 to 80% crystalline and 0.5 to 35% amorphous ingredients and 0.5 to 20% flavourings (by weight of the composition);
b) Adding 5 to 20% (by weight of the composition) of beef fat to the mixture of step a)
c) Further mixing all ingredients from step a) and b);
d) Optionally storage of the mixture;
e) Pressing a hard bouillon tablet;
f) Packaging the hard bouillon tablet;

wherein the beef fat has a total saturated fat content of 54 to 72 wt% (based on weight of total fat); and
wherein the beef fat comprises at 26.5-31 wt% (based on weight of total fat) of C18:0 and 25.5 to 33 wt% (based on weight of total fat) of C16:0.

A third aspect of the invention relates to a use of a hard bouillon tablet for preparing a food product.

It has been surprisingly found by the inventors that by using a fractionated beef fat having a total saturated fat content of 54 to 72 wt% (based on weight of total fat); and wherein the beef fat comprises 26.5-31 wt% (based on weight of total fat) of C18:0 and 25.5 to 33 wt% (based on weight of total fat) of C16:0 helps to achieve the necessary attributes to bind different ingredients and fulfils the process and consumer expectations:

- the hard bouillon tablet has a good hardness for wrapping;
- the tablet breakage during the wrapping process is below 10%
- the tablet is easily crumbled as for consumer preference;
- the tablet is shelf stable over 12 month without the known drawback as oil/fat migration or water absorption and avoids post-hardening;
- the usage of palm fat can be avoided/replaced.

## DETAILED DESCRIPTION

The present invention pertains to a hard bouillon tablet comprising

i) 40 to 80% crystalline ingredients (by weight of the composition);
ii) 0.5 to 20% flavourings (by weight of the composition);

iii) 0.5 to 35% amorphous ingredients (by weight of the composition);
iv) 5 to 20% beef fat (by weight of the composition);

wherein the beef fat has a total saturated fat content of 54 to 72 wt% (based on weight of total fat); and
wherein the beef fat comprises 26.5-31 wt% (based on weight of total fat) of C18:0 and 25.5 to 33 wt% (based on weight of total fat) of C16:0.

"Hard bouillon tablet" means "tablet or cube obtained by pressing a free flowing bouillon powder into a tablet or cube form"

"Beef fat" according to this invention having a total saturated fat content of 54 to 72 wt% (based on weight of total fat) and comprises 26.5-31 wt% (based on weight of total fat) of C18:0 and 25.5 to 33 wt% (based on weight of total fat) of C16:0 is a fractionated beef fat. In a preferred embodiment, the hard bouillon tablet of the present invention does not include hydrogenated fat. In a further embodiment, the hard bouillon tablet comprises fat in an amount in the range of 5 to 20% (by weight of the total composition), preferably between 5 to 15%, preferably between 6 to 14% (by weight of the total composition). In an embodiment C18:0 is Stearic acid. C18:0 is in the range of 26.5 to 31 wt% (based on weight of total fat). In an embodiment the fat has a total saturated fat content of 54 to 72 wt% (based on weight of total fat), preferably a total saturated fat content of 57 to 68 wt%, preferably a total saturated fat content of 57.5 to 68 wt% (based on weight of total fat). In an embodiment the fat has a solid fat content at 30°C of 45 to 75 wt% (based on weight of total fat), preferably 48 to 75 wt% (based on weight of total fat), preferably 50 to 67 wt% (based on weight of total fat), more preferably 53 to 67 wt% (based on weight of total fat). In an embodiment the fat is a 100% non-hydrogenated fat. In an embodiment the fat does not include palm fat. In an embodiment the fat further comprises C16:0. C16:0 is Palmitic acid. In a further embodiment the fat further comprises C16:0 in the range of 25.5 to 33 wt% (based on weight of total fat), preferably C16:0 is in the range of 26 to 33 wt% (based on weight of total fat), more preferably C16:0 is in the range of 26.5 to 31 wt% (based on weight of total fat). Standard commercial available beef fat (see example 1) has a total saturated fat content of less than 52 wt% (based on weight of total fat) comprising the following key fatty acids C16:0 in the range of 20 to 25.4 wt% (based on weight of total fat) and C18:0 in the range of 15 to 22 wt% (based on weight of total fat).

"Crystalline ingredients" according to this invention means at least one ingredient of salt, monosodium glutamate or sugar. The hard bouillon tablet comprises 40 to 80% (by weight of the composition) crystalline ingredients of at least one of salt, monosodium glutamate, sugar or citric acid anhydrous, preferably 45 to 75%, preferably 45 to 70%, preferably 45 to 65%, preferably 50 to 65%, more preferably 52 to 63% (by weight of the composition) crystalline ingredients of at least one of salt, monosodium glutamate or sugar. Salt is preferably sodium chloride, but can also comprise other edible salts capable of imparting or enhancing a salty taste perception, such as potassium chloride. In a further embodiment, the composition comprises salt in an amount in the range of 20 to 60% (by weight of the composition), preferably between 30 to 55%, preferably between 35 to 50% (by weight of the composition). In a further embodiment, the composition comprises monosodium glutamate in an amount in the range of 0 to 25% (by weight of the composition), preferably between 0 to 20%, preferably between 0 to 15%, preferably between 0.5 to 25%, preferably between 0.5 to 15%, preferably between 5 to 10% (by weight of the composition). In a further embodiment, the composition comprises sugar in an amount in the range of 0 to 20% (by weight of the composition), preferably between 0 to 15%, preferably between 0.5 to 15%, preferably between 5 to 10% (by weight of the composition). In a further embodiment, the composition comprises citric acid anhydrous in an amount in the range of 0 to 5% (by weight of the composition), preferably between 0.5 to 4%, preferably between 0.5 to 1.5% (by weight of the composition).

"Amorphous ingredients" according to this invention means at least one ingredient of yeast extract, maltodextrin, starches, flours, vegetable extract, glycose syrup or onion powder. The hard bouillon tablet comprises 0.5 to 35% amorphous ingredients (by weight of the composition) composed of at least one of yeast extract, maltodextrin, starches, flours vegetable extract or glycose syrup, preferably 2 to 35%, preferably 5 to 35%, preferably 5 to 30%, preferably 5 to 25%, preferably 5 to 20%, preferably 5 to 15%, preferably 7 to 12% (by weight of the composition). In a further embodiment, the composition comprises yeast extract in an amount in the range of 0 to 15% (by weight of the composition), preferably between 1 to 15%, preferably between 5 to 10% (by weight of the composition). In a further embodiment, the composition comprises starches and/or flours in an amount in the range of 0 to 15% (by weight of the composition), preferably between 1 to 15%, preferably between 5 to 10% (by weight of the composition). In a further embodiment, the composition comprises glucose syrup in an amount in the range of 0 to 15% (by weight of the composition), preferably between 1 to 15%, preferably between 5 to 10% (by weight of the composition). In a further embodiment, the composition comprises maltodextrin in an amount in the range of 0 to 15% (by weight of the composition), preferably between 1 to 15%, preferably between 5 to 10% (by weight of the composition).

The term "flavourings" in the context of the composition means flavouring agents, herbs, spices, vegetables, meat and fish components (in wet or powder form). Flavouring agents can include parsley, celery, fenugreek, lovage, rosemary, marjoram, dill, tarragon, coriander, ginger, lemongrass, curcuma, chili, ginger, paprika, mustard, garlic, onion, turmeric, tomato, coconut milk, cheese, oregano, thyme, basil, chillies, paprika, tomato, pimento, jalapeno pepper, white pepper powder and black pepper. In a further embodiment, the composition comprises flavourings in an amount in the range of 0.5 to 20% (by weight of the composition), preferably between 1 to 20%, preferably between 5 to 20% (by weight of the composition).

In a preferred embodiment, the oil is a vegetable oil. Preferably, the oil is selected from the group consisting of sunflower oil, rape seed oil, cotton seed oil, peanut oil, soya oil, olive oil, coconut oil, or a combination thereof; more preferably sunflower oil. In a further embodiment, the composition comprises oil in an amount in the range of 0 to 5% (by weight of the composition), preferably between 0 to 3% (by weight of the composition), preferably between 0.5 to 3% (by weight of the composition).

Oil of the present seasoning product is liquid at a room temperature of 25°C, preferably at a room temperature of 20°C. Fat of the present invention is solid at a room temperature of 25°C, preferably at a room temperature of 20°C.

In an embodiment, the hard bouillon tablet has a tablet hardness of at least 100 N, preferably at least 110N, preferably at least 120N, preferably between 100 to 500N, preferably between 100 to 300N, preferably between 100 to 250N.

In an embodiment the hard bouillon tablet is shelf-stable over 12 months and therefore has a water activity of below 0.45, preferably between 0.1 to 0.45.

The process step c) mentioned above is not only to mix the ingredients but also to achieve a fat crystallisation. The storage described within d) is also to achieve a fat crystallisation. The described pressing within d) is to reduce the volume of the composition to obtain a tablet or cube form.

## EXAMPLES

The invention is further described with reference to the following examples. It is to be appreciated that the examples do not in any way limit the invention.

*Preparation of bouillon (seasoning) mass*

Fat in block form was melted in an oven at 80 °C. Meanwhile, crystalline ingredients, amorphous ingredients and flavourings (in powdered form) were weighted in PG5002S balance (Mettler-Toledo, USA) and then mixed manually. After the fat block was completely melted (clear and transparent in appearance), the liquid fat was added to powdered mixture. Subsequently, the mixture was transferred to Thermomix Type 31-1 (Vorwerk Elektrowerke GmbH & Co.AG, Germany). Mixing using Thermomix was carried out in speed 3 for 30 s with propeller rotation was set to reverse direction. One batch mixing was carried out for 500 g bouillon mass. The resulting mass was then stored in a sealed box for 24 h at room temperature prior to pressing.

*Pressing of bouillon tablet*

Bouillon pressing was carried out with Flexitab Tablet Pressing equipment (Röltgen GmbH, Germany). Ten gram of bouillon mass was fed to tableting mold (31 mm in length and 23 mm in width) and the Röltgen tablet pressing was adjusted (between 8 and 11 mm) to reach a pressing force of 15 kN.

*Measurement of bouillon tablet hardness*

Hardness measurement was carried out using Texture Analyser TA-HDplus (Stable Micro System, UK) equipped with 250 kg load cell and P/75 compression platen. Texture Analyser test mode was set to "Compression" with pre-test speed of 1 mm/s, test speed of 0.5 mm/s, post-test speed of 10 mm/s, target mode of "Distance", distance of 3 mm, halt time was set to "No", way back of 10 mm, trigger type to "Auto(Force), and trigger force of 50 gram. Bouillon tablet was placed centrally in vertical-landscape orientation. Hardness measurement was carried out in 10 replication.

**Examples 1-7:**

Different kind of fats have been tested.

|  | Comp Ex. 1 | Ex. 2 | Ex. 3 | Ex. 4 |
|---|---|---|---|---|
| Salt | 49wt% | 49wt% | 49wt% | 49wt% |
| MSG | 20wt% | 20wt% | 20wt% | 20wt% |

(continued)

| | Comp Ex. 1 | Ex. 2 | Ex. 3 | Ex. 4 |
|---|---|---|---|---|
| Maltodextrin | 10wt% | 10wt% | 10wt% | 10wt% |
| Starch | 10wt% | 10wt% | 10wt% | 10wt% |
| Flavourings | 1wt% | 1wt% | 1wt% | 1wt% |
| Fat | 1 0wt% beef fat | 1 0wt% beef fat | 1 0wt% beef fat | 1 0wt% beef fat |
| Fat composition | | | | |
| C16:0 | 25.4 | 25.7 | 27.5 | 27.7 |
| C18:0 | 21.3 | 26.7 | 26.9 | 28.1 |
| SFA (g/100g) | 51.5 | 57.8 | 60 | 61.6 |
| SFA + TFA (g/100g) | 55.5 | 61.8 | 63.8 | 65.5 |
| SFC at 30°C | 27.8 | 50 | 54.2 | 56 |
| Tablet Hardness | 79.8 | 133.2 | 139.2 | 169.1 |
| Tablet Breakage | 90% | 4.5% | 4% | 4% |

| | Ex. 5 | Ex. 6 | Comp Ex.7 |
|---|---|---|---|
| Salt | 49wt% | 49wt% | 49wt% |
| MSG | 20wt% | 20wt% | 20wt% |
| Maltodextrin | 10wt% | 10wt% | 10wt% |
| Starch | 10wt% | 10wt% | 10wt% |
| Flavourings | 1wt% | 1wt% | 1wt% |
| Fat | 10wt% beef fat | 10wt% beef fat | 10wt% palm fat |
| Fat composition | | | |
| C16:0 | 28.2 | 30.2 | 56.8 |
| C18:0 | 28.4 | 30.2 | 5.6 |
| SFA (g/100g) | 62.5 | 66.6 | 65 |
| SFA + TFA (g/100g) | 66.4 | 70.0 | 65,4 |
| SFC at 30°C | 60.2 | 65.6 | 54.0 |
| Tablet Hardness | 183.6 | 203.1 | 147.3 |
| Tablet Breakage | 3.5% | 3.5% | |

The comparison example 1 using standard beef fat has a lower tablet hardness as the beef fat having a total saturated fat content of at least 54 wt% (based on weight of total fat) and 26.5-31 wt% (based on weight of total fat) of C18:0, which results in a tablet breakage of 90% for standard beef fat compared to 4% for the fat of the invention during the wrapping process of the tablet.

In addition a technical panel of 6 trained people evaluated the crumbliness of example 1, 2 and 5. The tablet of example 1 has been perceived as too soft and all participants complained about oily fingers. Example 2 and 5 have good crumbliness properties with a slightly preference for example 2. No complaints of the participants regarding oily fingers has been described for examples 2 and 5.

**Examples 8-11:**

|  | Ex. 8 | Ex. 9 | Ex. 10 | Ex. 11 |
|---|---|---|---|---|
| Salt | 40wt% | 46wt% | 42wt% | 44wt% |
| MSG | 10wt% | 6wt% | 9wt% | 4wt% |
| Sugar | 7wt% | 7wt% | 5wt% | 7wt% |
| Maltodextrin | - | - | - | - |
| Starch | 11wt% | 9wt% | 13wt% | 13wt% |
| Glycose syrup | 8wt% | 7wt% | 12wt% | 11wt% |
| Flavourings | 12wt% | 13wt% | 13wt% | 15wt% |
| Oil | 1wt% | 1wt% | - | - |
| Beef Fat | 11wt% | 11wt% | 6wt% | 6wt% |
| Beef fat composition |  |  |  |  |
| C16:0 | 28.2 | 28.2 | 28.2 | 28.2 |
| C18:0 | 28.4 | 28.4 | 28.4 | 28.4 |
| SFA (g/100g) | 62.5 | 62.5 | 62.5 | 62.5 |
| SFA + TFA (g/100g) | 66.4 | 66.4 | 66.4 | 66.4 |
| SFC at 30°C | 60.2 | 60.2 | 60.2 | 60.2 |
| Tablet Hardness | 170 | 152 | 169 | 158 |

**Example 12:** Measurement of oiling out from bouillon tablet:

Oiling out was quantified by placing bouillon tablets horizontally on a 90 mm filter paper circle (Schleicher & Schuell). Subsequently the samples were stored for 2 days in a Climate Chamber ICH110 (Memmert GmbH + Co.KG, Germay) set to relative humidity (RH) of 30%, fan speed of 40 %, and temperatures of 23, 30, and 37 °C.

After storage, image of the filter paper was acquired using DigiEye apparatus (Verifide, UK) equipped with Nikon D90 and Nikon 35 mm f/2 lens. DigiEye lighting was set to "diffuse" and lens aperture was set to f/8. Severity of oil staining ($A_{staining}$) was quantified as the area in filter paper covered with oil compared to the contact area between filter paper and bouillon tablet:

$$A_{staining} = \frac{A_{filter}}{A_{tablet}} \times \%OS$$

with $A_{filter}$ the area of the filter paper ($6.36 \cdot 10^{-3}$ m$^2$), $A_{tablet}$ the contact area between filter paper and bouillon tablet ($7.13 \cdot 10^{-4}$ m$^2$), and $\%OS$ the percent area of the filter paper covered with the oil stain determined using "Unisort" feature in DigiEye software.

Table 1: $A_{staining}$ at varying storage temperature in %

|  | 20°C | 30°C | 37°C |
|---|---|---|---|
| Example 1 | 1.8 | 7.3 | 101.8 |
| Example 3 | 0.1 | 0.3 | 7 |
| Example 7 | 0.1 | 0.4 | 15.1 |

Example 1 using standard beef fat shows an oil staining ($A_{staining}$) of the tablet which is 15 to 24 times higher compared to the tablet using the fat of the invention. Oil staining will be visual seen on the surface of packaging and is negatively perceived by the consumers. Oil staining should be avoided as often during transportation and storage of the product the temperature is not controlled. The fat of the invention has less oil staining of the tablet as palm fat. During a shelf-life of 12 months there was no oil staining observed on the surface of the packaging material.

**Example 13:** Dissolution time in hot water:

Ten gram of a hard bouillon tablet are dissolved in 500ml water at a temp of 85 °C and stirred at 600 rpm with 60 mm magnetic stirrer. An average dissolution time of 16 sec is measured for the tablet according to example 1. An average dissolution time of 18 sec is measured for the tablet according to example 3. An average dissolution time of 17 sec is measured for the tablet according to comparison example 7. The average dissolution time is obtained by testing 6 samples from each tablet. This shows that a same dissolution time can be obtained using beef fat of the invention compared to standard beef fat or palm fat.

**Example 14:** Induction period of beef fat:

The induction period is defined as the period (measured in hours) during which no oxidative, volatile components are generated under certain defined conditions.

*Determination*

The rancimat is a special instrument which blows a stream of air through oil or fat that has been heated to a fixed temperature (e.g. 120/130°C). The oxidative, volatile substances formed by this treatment are collected in distilled water, increased water conductivity is the signal that the oil became rancid.

The induction period is based on ISO method 6886:2006; Rancimat/Oxidative Stability Instrument; $110.0\pm0.1$ °C ($230\pm0.2$ °F); $3.0\pm0.01$ g oil, airflow: 10.0 l/h.

It has been found that the induction period value for standard beef fat comprising of the following key fatty acids C16:0 of 25.5 (based on weight of total fat) and C18:0 of 21.3 wt% (based on weight of total fat) without any antioxidants is 21 hours at 120°C.

The induction period value for beef fat of the invention comprising of the following key fatty acids C16:0 of 27.5 (based on weight of total fat) and C18:0 of 26.9 wt% (based on weight of total fat) without any antioxidants is 38 hours at 120°C. Palm fat for example has an induction period value of 22 hours at 120°C. In case of longer induction period value, it can be correlated that the used fat within a bouillon tablet is more stable against oxidation and therefore a longer shelf life can be considered.

**Claims**

1.    A hard bouillon tablet comprising

> i) 40 to 80% crystalline ingredients (by weight of the composition);
> ii) 0.5 to 20% flavourings (by weight of the composition);
> iii) 0.5 to 35% amorphous ingredients (by weight of the composition);
> iv) 5 to 20% beef fat (by weight of the composition);
> wherein the beef fat has a total saturated fat content of 54 to 72 wt% (based on weight of total fat); and
> wherein the beef fat comprises 26.5 to 31 wt% (based on weight of total fat) of C18:0 and 25.5 to 33 wt% (based on weight of total fat) of C16:0.

2.    A hard bouillon tablet as claimed in claim 1, wherein the beef fat has a total saturated fat content of 57 to 68 wt% (based on weight of total fat)

3.    A hard bouillon tablet as claimed in any one of claims 1 to 2, wherein the beef fat is a non-hydrogenated beef fat.

4.    A hard bouillon tablet as claimed in any one of claims 1 to 3, wherein the beef fat is a non-hydrogenated fractionated beef fat.

5.    A hard bouillon tablet as claimed in any one of claims 1 to 4, wherein the crystalline ingredient is selected from at least one of salt, monosodium glutamate, sugar or citric acid anhydous.

6.    A hard bouillon tablet as claimed in any one of claims 1 to 5, wherein the amorphous ingredients is selected from at least one of yeast extract, maltodextrin, starches, flours, vegetable extract, glycose syrup or onion powder.

7. A hard bouillon tablet as claimed in any one of claims 1 to 6, wherein the amount of amorphous ingredients is in the range of 5 to 30% (by weight of the composition).

8. A hard bouillon tablet as claimed in any one of claims 1 to 7 does not include palm fat.

9. A hard bouillon tablet as claimed in any one of claims 1 to 8 further comprises 0 to 5% oil (by weight of the composition).

10. A hard bouillon tablet as claimed in any one of claims 1 to 9 further comprises a solid fat content at 30°C of 48 to 75 wt% (based on weight of total fat).

11. A hard bouillon tablet as claimed in any one of claims 1 to 10, wherein the hard bouillon tablet has a tablet hardness of at least 100 N.

12. A process for the preparation of a hard bouillon tablet as claimed in any one of claims 1 to 11 comprising:

a) Mixing crystalline and amorphous ingredients and flavourings;
b) Adding beef fat to the mixture of step a)
c) Further mixing all ingredients from step a) and b);
d) Optionally storage of the mixture;
e) Pressing a hard bouillon tablet;
f) Packaging the hard bouillon tablet;

13. The use of a hard bouillon tablet as claimed in any of claims 1 to 11 for preparing a food product.

**Patentansprüche**

1. Harte Bouillontablette, umfassend

i) zu 40 bis 80 % kristalline Bestandteile (Gew.-% der Zusammensetzung);
ii) zu 0,5 bis 20 % Aromen (Gew.-% der Zusammensetzung);
iii) zu 0,5 bis 35 % amorphe Bestandteile (basierend auf dem Gewicht der Zusammensetzung);
iv) zu 5 bis 20 % Rinderfett (Gew.-% der Zusammensetzung);

wobei das Rinderfett einen gesamten gesättigten Fettgehalt von zu 54 bis 72 Gew.-% (basierend auf dem Gesamtfettgewicht) aufweist; und
wobei das Rinderfett zu 26,5 bis 31 Gew.-% (basierend auf dem Gesamtfettgewicht) von C18 : 0 und zu 25,5 bis 33 Gew.-% (basierend auf dem Gesamtfettgewicht) von C16 : 0 umfasst.

2. Harte Bouillontablette nach Anspruch 1, wobei das Rinderfett einen gesamten gesättigten Fettgehalt von zu 57 bis 68 Gew.-% (basierend auf dem Gesamtfettgewicht) aufweist

3. Harte Bouillontablette nach einem der Ansprüche 1 bis 2, wobei das Rinderfett ein ungehärtetes Rinderfett ist.

4. Harte Bouillontablette nach einem der Ansprüche 1 bis 3, wobei das Rinderfett ein ungehärtetes fraktioniertes Rinderfett ist.

5. Harte Bouillontablette nach einem der Ansprüche 1 bis 4, wobei der kristalline Bestandteil aus mindestens einem von Salz, Mononatriumglutamat, Zucker oder anhydrischer Zitronensäure ausgewählt ist.

6. Harte Bouillontablette nach einem der Ansprüche 1 bis 5, wobei die amorphen Bestandteile aus mindestens einem von Hefeextrakt, Maltodextrin, Stärken, Mehlen, Pflanzenextrakt, Glycosesirup oder Zwiebelpulver ausgewählt sind.

7. Harte Bouillontablette nach einem der Ansprüche 1 bis 6, wobei die Menge an amorphen Bestandteilen in dem Bereich von zu 5 bis 30 % (Gew.-% der Zusammensetzung) liegt.

8. Harte Bouillontablette nach einem der Ansprüche 1 bis 7, die kein Palmfett einschließt.

**9.** Harte Bouillontablette nach einem der Ansprüche 1 bis 8, die ferner 0 bis 5 % Öl (Gew.-% der Zusammensetzung) umfasst.

**10.** Harte Bouillontablette nach einem der Ansprüche 1 bis 9, die ferner bei 30 °C zu 48 bis 75 Gew.-% (basierend auf dem Gesamtfettgewicht) umfasst.

**11.** Harte Bouillontablette nach einem der Ansprüche 1 bis 10, wobei die harte Bouillontablette eine Tablettenhärte von mindestens 100 N aufweist.

**12.** Verfahren für die Herstellung einer harten Bouillontablette nach einem der Ansprüche 1 bis 11, umfassend:

a) Mischen von kristallinen und amorphen Bestandteilen und Aromen;
b) Hinzufügen von Rinderfett zu der Mischung aus Schritt a)
c) Weiteres Mischen aller Bestandteile aus Schritt a) und b);
d) Optional Lagerung der Mischung;
e) Pressen einer harten Bouillontablette;
f) Verpacken der harten Bouillontablette;

**13.** Verwendung einer harten Bouillontablette nach einem der Ansprüche 1 bis 11 zum Herstellen eines Nahrungsmittelprodukts.


**Revendications**

**1.** Comprimé de bouillon dur comprenant

i) 40 à 80 % d'ingrédients cristallins (en poids de la composition) ;
ii) 0,5 à 20 % d'arômes (en poids de la composition) ;
iii) 0,5 à 35 % d'ingrédients amorphes (en poids de la composition) ;
iv) 5 à 20 % de graisse de boeuf (en poids de la composition) ;

dans lequel la graisse de boeuf a une teneur totale en graisses saturées de 54 à 72 % en poids (sur la base du poids de la matière grasse totale) ; et
dans lequel la graisse de boeuf comprend de 26,5 à 31 % en poids (sur la base du poids de la matière grasse totale) de C18:0 et 25,5 à 33 % en poids (sur la base du poids de la matière grasse totale) de C16:0.

**2.** Comprimé de bouillon dur selon la revendication 1, dans lequel la graisse de boeuf a une teneur totale en graisses saturées de 57 à 68 % en poids (sur la base du poids de la matière grasse totale)

**3.** Comprimé de bouillon dur selon l'une quelconque des revendications 1 à 2, dans lequel la graisse de boeuf est une graisse de boeuf non hydrogénée.

**4.** Comprimé de bouillon dur selon l'une quelconque des revendications 1 à 3, dans lequel la graisse de boeuf est une graisse de boeuf fractionnée non hydrogénée.

**5.** Comprimé de bouillon dur selon l'une quelconque des revendications 1 à 4, dans lequel l'ingrédient cristallin est choisi parmi au moins l'un parmi du sel, du glutamate monosodique, du sucre ou de l'acide citrique anhydre.

**6.** Comprimé de bouillon dur selon l'une quelconque des revendications 1 à 5, dans lequel les ingrédients amorphes sont choisis parmi au moins l'un parmi un extrait de levure, de la maltodextrine, des amidons, des farines, un extrait végétal, du sirop de glucose ou une poudre d'oignon.

**7.** Comprimé de bouillon dur selon l'une quelconque des revendications 1 à 6, dans lequel la quantité d'ingrédients amorphes est dans la plage de 5 à 30 % (en poids de la composition).

**8.** Comprimé de bouillon dur selon l'une quelconque des revendications 1 à 7 ne comporte pas de graisse de palme.

**9.** Comprimé de bouillon dur selon l'une quelconque des revendications 1 à 8, comprenant en outre de 0 à 5 % d'huile (en poids de la composition).

10. Comprimé de bouillon dur selon l'une quelconque des revendications 1 à 9, comprenant en outre une teneur en matières grasses solides à 30 °C de 48 à 75 % en poids (sur la base du poids de la matière grasse totale).

11. Comprimé de bouillon dur selon l'une quelconque des revendications 1 à 10, dans lequel le comprimé de bouillon dur a une dureté de comprimé d'au moins 100 N.

12. Processus de préparation d'un comprimé de bouillon dur tel que revendiqué dans l'une quelconque des revendications 1 à 11, comprenant :

   a) le mélange des ingrédients cristallins et amorphes et des arômes ;
   b) l'ajout de graisse de boeuf au mélange de l'étape a)
   c) le mélange en outre de tous les ingrédients de l'étape a) et b) ;
   d) éventuellement le stockage du mélange ;
   e) le pressage d'un comprimé de bouillon dur ;
   f) l'emballage du comprimé de bouillon dur ;

13. Utilisation d'un comprimé de bouillon dur selon l'une quelconque des revendications 1 à 11, pour la préparation d'un produit alimentaire.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1401295 A

- EP 2842434 A1